(19) Europäisches Patentamt
European Patent Office
Office européen des brevets

(11) **EP 3 081 292 A1**

(12) **EUROPEAN PATENT APPLICATION**

(43) Date of publication:
**19.10.2016 Bulletin 2016/42**

(51) Int Cl.:
*B01J 20/28* (2006.01)   *B01J 20/18* (2006.01)
*B01J 20/20* (2006.01)   *B01J 20/08* (2006.01)
*B01J 20/10* (2006.01)   *B01J 20/22* (2006.01)
*B01D 53/04* (2006.01)

(21) Application number: **15163658.6**

(22) Date of filing: **15.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **AIR PRODUCTS AND CHEMICALS, INC.**
**Allentown, PA 18195-1501 (US)**

(72) Inventors:
• **Harriott, George Matthew**
**Allentown, PA 18104 (US)**

• **Jin, Bo**
**Orefield, PA 18069 (US)**
• **O'Neill, Christopher Michael**
**Allentown, PA 18103 (US)**
• **Weist Jr., Edward Landis**
**Macungie, PA 18062 (US)**
• **Whitley, Roger Dean**
**Allentown, PA 18104-8501 (US)**
• **Wu, Junxiao**
**Breinigsville, PA 18031 (US)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **PERFORATED ADSORBENT PARTICLES**

(57) An adsorbent particle, an adsorption bed containing the adsorbent particles, a gas separation process using the adsorbent particles, and methods for making the adsorbent particles. The adsorbent particle comprises an adsorbent material where the adsorbent particle has at least 10 channels extending through the particle. The equivalent diameter of the channels may range from 0.05 mm to 1.5 mm, and the void fraction of the channels may range from 0.05 to 0.5.

FIG. 1

## Description

BACKGROUND

The present invention relates to non-cryogenic separation of gas mixtures by adsorption.

Gas separation by adsorption is well-known. The literature is replete with descriptions of gas separation by adsorption.

The effect of adsorption particles on mass transport and flow resistance must be considered in the design of adsorption units and processes. The constraints of particle size on adsorption are well-known: diffusional mass transport is favored in small particles while large particles reduce flow resistance through the adsorption bed thereby reducing pressure drop through the adsorption bed. As a result, the particle size must be selected to balance these conflicting objectives.

Industry desires adsorption particles that provide improved diffusional mass transport while decreasing the pressure drop in the adsorption bed.

BRIEF SUMMARY

The present invention relates generally to gas separation by adsorption, and more specifically to an adsorbent particle, an adsorption bed containing a plurality of the adsorbent particles, a gas separation process using a plurality of the adsorbent particles, and methods for making the adsorbent particles.

There are several aspects of the invention as outlined below. In the following, specific aspects of the invention are outlined below. The reference numbers and expressions set in parentheses are referring to an example embodiment explained further below with reference to the figures. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.

Aspect 1. An adsorbent particle (10) comprising:

an adsorbent material capable of preferentially adsorbing at least one more strongly adsorbable gaseous component in a mixture comprising at least two gaseous components comprising the at least one more strongly adsorbable component and at least one less strongly adsorbable component, wherein the adsorbent material is a material selected from the group consisting of activated alumina, activated carbon, zeolites, mesopore-structured materials, carbon molecular sieve, metal-organic framework materials, silica gel, and combinations thereof;

wherein the adsorbent particle defines a plurality of channels (20) numbering at least 10, the plurality of channels (20) extending through the adsorbent particle (10) in a lengthwise direction from a first end (22) to a second end (24).

Aspect 2. The adsorbent particle (10) of aspect 1 wherein the plurality of channels (20) extending through the adsorbent particle (10) in the lengthwise direction from the first end (22) to the second end (24) number at least 20, or at least 50, or at least 100, or at least 200, or at least 500, or at least 1000.

Aspect 3. The adsorbent particle of aspect 1 or aspect 2 wherein each channel of the plurality of channels (20) has an equivalent diameter, d, ranging from 0.05 mm to 1.5mm, or ranging from 0.05 mm to 0.8 mm, or ranging from 0.05 mm to 0.5 mm, where

$$d = 2\sqrt{\frac{A}{\pi}},$$

where $A$ is the cross-sectional area normal to the lengthwise direction for each respective channel.

Aspect 4. The adsorbent particle of any one of aspects 1 to 3 wherein each channel of the plurality of channels (20) has a respective distance of travel through the channel from the first end (22) to the second end (24) where the respective distance of travel is less than 150% of a respective straight-line distance from the first end (22) to the second end (24) for each channel.

Aspect 5. The adsorbent particle of any one of aspects 1 to 4 wherein each of the plurality of channels (20) is straight or substantially straight.

Aspect 6. The adsorbent particle of any one of aspects 1 to 5 wherein the channels of the plurality of channels (20) are parallel or substantially parallel.

Aspect 7. The adsorbent particle of any one of aspects 1 to 5 wherein the channels of the plurality of channels do not intersect one another.

Aspect 8. The adsorbent particle of any one of aspects 1 to 7 wherein the adsorbent particle has a void fraction, $\frac{V_C}{V_T}$, ranging from 0.05 to 0.5, where

$V_C$ is the void volume in the adsorbent particle formed by a total number of channels in the adsorbent particle, and $V_T$ is the total (bulk) volume of the adsorbent particle including the void volume, the adsorbent particle having no more and no less than the total number of channels.

Aspect 9. The adsorbent particle of any one of aspects 1 to 8 wherein the adsorbent particle has a longest spatial dimension wherein the longest spatial dimension is from 1 mm to 50 mm or from 1 mm to 15 mm.

Aspect 10. The adsorbent particle of any one of aspects 1 to 9 wherein the adsorbent material is a material selected from the group consisting of NaX zeolite, CaX zeolite, LiX zeolite, carbon molecular sieve, and combinations thereof.

Aspect 11. The adsorbent particle of any one of aspects 1 to 9 wherein the adsorbent material is a material selected from the group consisting of activated carbon, 5A zeolite, CaX zeolite, 13X zeolite, and combinations thereof.

Aspect 12. The adsorbent particle of any one of aspects 1 to 10, wherein the plurality of channels (20) is obtained by post-processing of a preformed particle intermediate.

Aspect 13. The adsorbent particle of aspect 12, wherein post-processing includes removing material obstructing the plurality of channels (20) within the preformed particle intermediate.

Aspect 14. The adsorbent particle of any one of aspects 1 to 10, comprising hollow fibers of the adsorbent material and a matrix material, the hollow fibers embedded in or bonded together by the matrix material, wherein the channels of the plurality of channels (20) are defined, each, by one of the hollow fibers.

Aspect 15. An adsorption vessel (40) containing an adsorption bed comprising a plurality of the adsorbent particles according to any one of aspects 1 to 14.

Aspect 16. The adsorption vessel of aspect 15, having an inlet and an outlet for the mixture comprising the at least two gaseous components, the inlet and the outlet defining a principal direction of flow through the adsorption vessel (40) during an adsorption cycle feed step, wherein at least a predominant number of the channels (20) of the plurality of the the adsorbent particles (10) are aligned with the principal direction of flow through the adsorption vessel (40).

Aspect 17. The adsorption vessel of aspect 15 or aspect 16 wherein the adsorption bed comprises a first layer comprising the plurality of adsorbent particles according to any one of aspects 1 to 14 and a second layer of a plurality of adsorbent particles not having a plurality of channels extending through the adsorbent particle (10) in a lengthwise direction from a first end (22) to a second end (24) defined therein.

Aspect 18. A process for separating a gaseous mixture (30) comprising at least two gaseous components, the process comprising:

passing the gaseous mixture (30) to an adsorption unit (50), the adsorption unit (50) comprising one or more adsorption vessels (40), each of the one or more adsorption vessels (40) containing a plurality of the adsorbent particles (10), each of the plurality of adsorbent particles (10) comprising an adsorbent material capable of preferentially adsorbing an at least one more strongly adsorbable gaseous component in the gaseous mixture (30), wherein each of the plurality of adsorbent particles (10) define a plurality of channels (20) numbering at least 10, the plurality of channels (20) for each particle (10) extending through the respective adsorbent particle in a lengthwise direction from a first end (22) to a second end (24); and

separating the at least one more strongly adsorbable component from an at least one less strongly adsorbable component in the gaseous mixture (30) in the adsorption unit (50) to form a first product stream (60) enriched in the at least one less strongly adsorbable component and a second product stream (70) enriched in the at least one more strongly adsorbable component.

Aspect 19. The process of aspect 18 wherein the adsorption unit (50) is a pressure swing adsorption unit.

Aspect 20. The process of aspect 18 or aspect 19 wherein the adsorbent material is a material selected from the group consisting of activated alumina, activated carbon, zeolites, mesopore-structured materials, carbon molecular sieve, metal-organic framework materials, silica gel, and combinations thereof.

Aspect 21. The process of any one of aspects 18 to 20 wherein the plurality of channels extending through the adsorbent particle in the lengthwise direction from the first end (22) to the second end (24) number at least 20, or at least 50, or at least 100, or at least 200, or at least 500, or at least 1000.

Aspect 22. The process of any one of aspects 18 to 21 wherein each channel of the plurality of channels has an equivalent diameter, d, ranging from 0.05 mm to 1.5 mm or ranging from 0.05 to 0.8 mm, or ranging from 0.05 to 0.5 mm, where $d = 2\sqrt{\dfrac{A}{\pi}}$ , where $A$ is the cross-sectional area normal to the lengthwise direction for each respective channel.

Aspect 23. The process of any one of aspects 18 to 22 wherein each channel of the plurality of channels has a respective distance of travel through the channel from the first end to the second end where the respective distance of travel is less than 150% of a respective straight-line distance from the first end to the second end for each channel.

Aspect 24. The process of any one of aspects 18 to 23 wherein the plurality of channels are straight or substantially straight.

Aspect 25. The process of any one of aspects 18 to 24 wherein the plurality of channels are parallel or substantially parallel.

Aspect 26. The process of any one of aspects 18 to 25 wherein the plurality of channels do not intersect one another.

Aspect 27. The process of any one of aspects 18 to 26 wherein the adsorbent particle has a void fraction,

$$\frac{V_c}{V_T}$$, ranging from 0.05 to 0.5, where $V_C$ is the void volume in the adsorbent particle formed by a total number of channels in the adsorbent particle, and $V_T$ is the total volume of the adsorbent particle including the void volume, the adsorbent particle having no more and no less than the total number of channels.

Aspect 28. The process of any one of aspects 18 to 27 wherein the adsorbent particle has a longest spatial dimension wherein the longest spatial dimension is from 1 mm to 50 mm or from 1 mm to 15 mm.

Aspect 29. The process of any one of aspects 18 to 28 wherein the adsorbent material is a material selected from the group consisting of NaX zeolite, CaX zeolite, LiX zeolite, carbon molecular sieve, and combinations thereof.

Aspect 30. The process of any one of aspects 18 to 28 wherein the adsorbent material is a material selected from the group consisting of 5A zeolite, CaX zeolite, 13X zeolite, activated carbon, and combinations thereof.

Aspect 31. The process of any one of aspects 18 to 30 wherein the one or more adsorption vessels (40) are adsorption vessels according to any one of aspects 15 to 17.

Aspect 32. A method for making a plurality of the adsorbent particles according to any one of aspects 1 to 14, the method comprising:

(a) forming a composite rope comprising a precursor for forming the adsorbent material and fibers embedded in the precursor such that the fibers extend in a lengthwise direction of the composite rope, wherein the adsorbent material is a material selected from the group consisting of activated alumina, activated carbon, zeolites, mesopore-structured materials, carbon molecular sieve, metal-organic framework materials, silica gel, and combinations thereof;

(b) forming dried particle intermediates by drying and dividing the composite rope or by dividing the composite rope to form particle intermediates and drying the particle intermediates; and

(c) removing the fibers from the particle intermediates by chemically dissolving the fibers and/or firing to burn out the fibers to form the plurality of channels in each adsorbent particle.

Aspect 33. The method of aspect 32 wherein step (a) comprises extruding a paste comprising the fibers and the precursor through an orifice to form the composite rope.

Aspect 34. The method of aspect 32 wherein step (a) comprises coating the fibers with a suspension containing the precursor to form a plurality of fibrous unit cells and drawing the plurality of fibrous unit cells together to form the composite rope.

Aspect 35. The method of aspect 34 wherein the fibers of the plurality of fibers are coated by spray-coating or dip-coating.

BRIEF DESCRIPTION OF SEVERAL VIEWS OF THE DRAWINGS

FIG. 1 is a side view of a cylindrical adsorbent particle having domed ends.

FIG. 2 is a cross-section of the cylindrical adsorbent particle of FIG. 1.

FIG. 3 is a process flow diagram of an adsorption unit.

DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The terms "rich" or "enriched" means having a greater mole % concentration of the indicated gas than the original stream from which it was formed.

The present invention relates generally to gas separation by adsorption, and more specifically to an adsorption particle, an adsorption bed containing a plurality of the adsorption particles, a gas separation process using a plurality of the adsorption particles, and methods for making the adsorbent particles. The adsorption particles may be used in any adsorption-type process, for example, pressure swing adsorption (PSA), or temperature swing adsorption (TSA). As used herein, the term pressure swing adsorption includes what is sometimes referred to as vacuum swing adsorption (VSA).

The adsorption particle comprises an adsorbent material capable of preferentially adsorbing at least one more strongly adsorbable gaseous component in a mixture comprising at least two gaseous components comprising the at least one more strongly adsorbable component and at least one less strongly adsorbable component. The gas mixture may be for example a synthesis gas stream where $H_2$ is separated from a mixture comprising $H_2$, $CO_2$, and CO, or the gas mixture may be air where $O_2$ is separated from $N_2$. As used herein, "preferentially adsorbing" includes both equilibrium and/or kinetic mechanisms.

Any suitable adsorbent material known in the art may be used. The adsorbent material may be a material selected from the group consisting of activated alumina, activated carbon, zeolites, mesopore-structured materials, carbon molecular sieve, metal-organic framework materials, silica gel, and combinations thereof. As used herein, the term "zeolites" includes both naturally-occurring and synthetically-made forms.

Adsorbent materials suitable for separating air to produce oxygen include zeolites, such as NaX, CaX, and LiX, where X zeolite may have a silicon/aluminum molar composition ratio from 1.0 to 1.25. This includes LSX zeolite.

Carbon molecular sieve is a suitable adsorbent for separating air to produce nitrogen.

Adsorbent materials suitable for separating a reformate comprising $H_2$, CO, and $CO_2$ to produce a hydrogen product gas include activated carbon, 5A zeolite, CaX zeolite, and/or 13X zeolite.

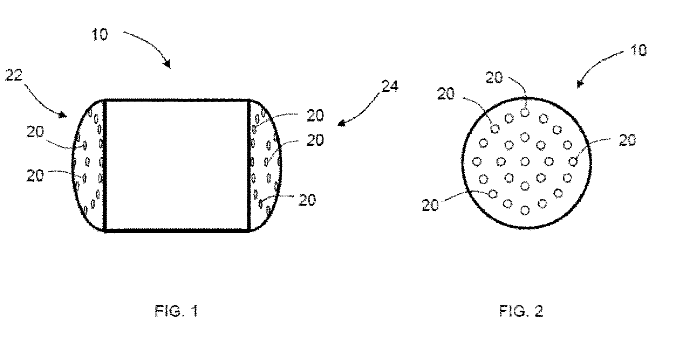

Referring to FIG. 1 and FIG. 2, the adsorbent particle 10 has a plurality of channels 20 (perforations) extending through the adsorbent particle 10. The plurality of channels 20 extend through the particle in a lengthwise direction from a first end 22 to a second end 24. The adsorbent particle has at least 10 channels. The adsorbent particle may have at least 20 channels, or at least 50 channels, or at least 100 channels, or at least 200 channels, or at least 500 channels. The particle may have as many as 1000 channels or as many as 5000 channels depending on the size of the adsorbent particle.

The terms "channeled particle(s)" and "perforated particle(s)" are used interchangeably herein for adsorbent particle(s) having a plurality of such through channels.

The cross section of the channels 20 may be any desired shape, for example, circular, elliptical, multi-lobed, polygonal, or the like. The internal surface of the channels may contain flutes, ridges, dimples, knurls, or other perturbations. The cross section may be constant over the length of the channels or may vary over the length.

Each channel of the plurality of channels has its respective equivalent diameter, d. The equivalent diameters of the plurality of channels may range from 0.05 mm to 1.5 mm or range from 0.05 mm to 0.8 mm, or range from 0.05 mm to 0.5 mm. The equivalent diameter for each of the plurality of channels may be the same or they may be different from one another. The equivalent diameter, d, is defined herein as $d = 2\sqrt{\dfrac{A}{\pi}}$ where $A$ is the cross-sectional area normal to the lengthwise direction for each respective channel.

The cross-sectional area may be measured by image analysis of photomicrographs. The area may be determined using software for calculating area by pixel counting. Commercial software is available for pixel counting, for example, ImageJ, which is available for download from the National Institutes of Health website.

The cross-sectional area should be large enough to supply adequate flow that matches or exceeds the diffusional mass transfer rate within adjacent adsorbent material.

Each channel of the plurality of channels 20 may have a respective distance of travel through the channel from the first end 22 to the second end 24 where the respective distance of travel is less than 150% of a respective straight-line distance from the first end 22 to the second end 24 for each channel.

The plurality of channels 20 may be straight or substantially straight.

The plurality of channels 20 may extend through the adsorption particle without intersecting one another.

The plurality of channels 20 may be parallel or substantially parallel.

Channels 20 that are at least substantially straight and at least substantially parallel and aligned with the principal direction of flow through an adsorption vessel or bed are most effective, but significant benefits can result even with channels that are randomly oriented with respect to the flow in the adsorption vessel or bed.

The plurality of channels 20 forms a void volume, $V_C$, in the particle, where the void volume is the sum of the volumes of all of the channels in the adsorbent particle. The adsorbent particle may have a void fraction, $\dfrac{V_C}{V_T}$, ranging from 0.05 to 0.5, where $V_T$ is the total (i.e. bulk) volume of the adsorbent particle. The total volume, $V_T$, of the adsorbent particle is the bulk volume of the entire particle including the void volume. For example, for a particle having the shape of a cylinder with diameter, D, and a length, L, the total volume, $V_T$, can be calculated by the equation $V_T = \dfrac{\pi D^2 L}{4}$.

The adsorbent particle may be formed in any suitable shape. As shown in FIG. 1, the adsorbent particle 10 may be a cylinder with domed ends. The adsorbent particle may be a cylinder, a sphere, a spheroid, or an irregular shape. The external surfaces may feature flutes, ridges, knurls, and/or dimples to either promote a particular type of packing or reduce flow resistance. The adsorbent material may be in any shape capable of being formed by extrusion, for example, having a circular, elliptical, polygonal, or multi-lobed cross-section. The adsorbent material may be in any shape capable of being formed by pressing.

The adsorbent particle may have a longest special dimension ranging from 1 mm to 50 mm, or ranging from 1 mm to 15 mm.

Cylindrical particles and extrudates may have domed ends to ensure channels are not blocked by neighboring particles in a random or semi-regular packing. Cylinders, spheroids and extrudates of moderate aspect (height/diameter) ratio (0.5-2.0) are of particular interest as they pack more tightly than spheres, thereby partially offsetting the channel void. Particles of aspect ratio greater than one may be (partially) axially orientated by screens during the filling process. Magnetic fields may be employed to favor axial orientation of particles containing iron or other magnetically-susceptible components. Tapping, shaking, pulsed fluidization and other methods of disrupting the packing may be applied to promote particle alignment either during or after the filling process. Particle exteriors may incorporate flats, flutes, dimples or other deliberate perturbations to the macroscopic shape that facilitate particle alignment.

The present invention also relates to an adsorption vessel or bed comprising a plurality of the adsorbent particles as described herein. The adsorbent particles or at least a predominant number of the adsorbent particles may be aligned in the adsorption vessel or bed such that the channels of the aligned adsorption particles are aligned with a principal direction of gas flow through the adsorption vessel or bed. The principal direction of gas flow points from an inlet of the adsorption vessel or bed through which a gaseous mixture may flow into the adsorption vessel or bed to an outflow of the adsorption vessel or bed through which a less strongly adsorbable component of the gaseous mixture may leave the adsorption vessel or bed. The principal direction of flow may be parallel to a shortest line connecting the inlet with the outlet.

The present invention also relates to methods for making adsorbent particles having a plurality of channels extending therethrough.

The adsorption particles with channels may be fabricated by extrusion, etching, or aggregation.

In an extrusion-based method, the method for making a plurality of adsorbent particles comprises extruding a paste comprising fibers and a precursor for forming the adsorbent material through an orifice to make a rope of extruded paste. The adsorbent material may be a material selected from the group consisting of activated alumina, activated carbon, zeolites, mesoporestructured materials, carbon molecular sieve, metal-organic framework materials, silica gel, and combinations thereof.

Extrusion is a well-established method of forming cylindrical adsorbent particles on the order of millimeters in diameter. The paste to be extruded may be a mixture of the adsorbent material and one or more of binders, surfactants, and/or pore forming agents. Fibers suitable for forming channels with the desired effective diameter may be added to the paste which can either be dissolved or burned out in a subsequent processing step. High shear rates in the extruder will preferentially align the fibers in the direction of extrusion.

The extrusion-based method comprises forming dried particle intermediates by dividing and drying the rope of extruded paste. The dried particle intermediates may be formed by first dividing the rope of extruded paste into a plurality of particle intermediates and then drying the particle intermediates or the rope of extruded paste may be first dried and then divided. Alternatively the rope of extruded paste may be partially dried, divided and then further dried. The rope may be divided by any means, for example by cutting, breaking, and the like.

The extrusion-based method further comprises removing the fibers from the particle intermediates by chemically dissolving the fibers and/or firing to burn out the fibers to form the plurality of channels in each adsorbent particle.

In the case of carbon molecular sieves, carbonization requires no $O_2$ and high temperatures (400-1200°C). If fibers are to be removed by combustion, this can be performed at a lower temperature with oxygen prior to carbonization. Alternatively, the fiber may be an organic structure which, when carbonized, will provide an open structure relative to the carbon molecular sieve. This could eliminate the lower temperature burn out step.

A related method involves etching channels as track-etched membranes are formed. Straight through channels have been drilled in zeolite particles with this procedure (cf. Valtchev et al., "High energy ion-radiation-induced ordered macropores in zeolite crystals," J. Am. Chem. Soc. 133, 18950-18956 (2001)).

An alternative approach, drawing on technology employed for film coating and fiber processing is to start with unit cells that are subsequently fused into a larger particle. The method comprises coating a plurality of fibers with a suspension or slurry containing a precursor for forming the adsorbent material to form a plurality of fibrous unit cells. The fibrous unit cells could be formed by spray- or dip-coating a thin film of adsorbent material on fine threads. When the coating is still tacky, parallel strands of fibrous unit cells can be drawn or pulled together axially to form an aggregated rope of the desired macroscopic diameter. Dried particle intermediates are formed by dividing and drying the rope. The dried particle intermediates may be formed by first dividing the rope into a plurality of particle intermediates and then drying the particle intermediates or the rope may be first dried and then divided. Alternatively the rope may be partially dried, divided and then further dried. The rope may be divided by any means, for example by cutting, breaking, and the like.

Finally, the fibers are removed from the particle intermediates by chemically dissolving and/or firing to burn out the fibers to form the plurality of channels in each adsorbent particle.

Yet another method uses membrane technology to form perforated unit cells of hollow adsorbent fibers, then bonding aligned fibers to create a channeled cord from which individual particles are cut (cf. Bhandari et al., "Hollow fiber sorbents for desulfurization of natural gas," Ind. Eng. Chem. Res., vol. 49, pp. 12038-12050 (2010)).

Established methods in coating technology and routine techniques and equipment for handling fine threads from fabric manufacturing may be applied with some modification to build channeled particles of precise geometry.

The present invention also relates to a process for separating a gaseous mixture comprising at least two gaseous components. The gas separation process may be a pressure swing adsorption process, or a temperature swing adsorption process. As used herein, pressure swing adsorption includes what is sometimes referred to as vacuum swing adsorption.

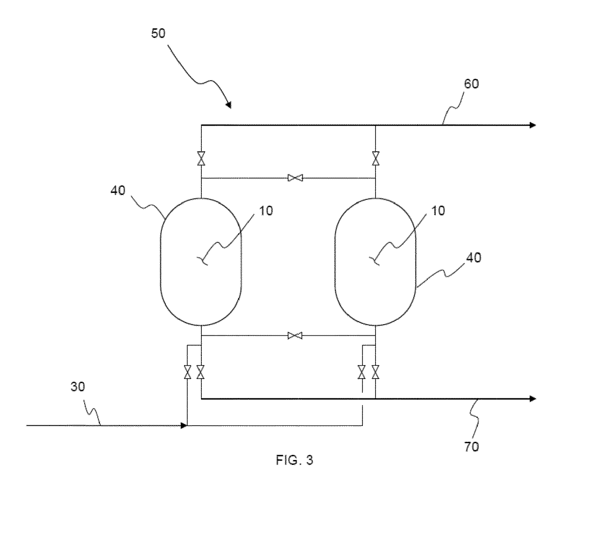

With reference to FIG. 3, the process comprises passing the gaseous mixture 30 to an adsorption unit 50. The adsorption unit 50 comprises one or more adsorption vessels 40 where each of the one or more adsorption vessels 40 contains a plurality of the adsorption particles 10. Each of the plurality of adsorbent particles comprise an adsorbent material capable of preferentially adsorbing an at least one more strongly adsorbable gaseous component in the gaseous mixture. Each of the plurality of adsorbent particles (shown in detail in FIGS. 1 and 2) define a plurality of channels 20 numbering at least 10, the plurality of channels 20 for each particle extending through the respective adsorbent particle in a lengthwise direction from a first end 22 to a second end 24.

The process comprises separating the at least one more strongly adsorbable component from an at least one less strongly adsorbable component in the gaseous mixture 30 in the adsorption unit 50 to form a first product stream 60 enriched in the at least one less strongly adsorbable component and a second product stream 70 enriched in the at least one more strongly adsorbable component.

The adsorption particles used in the process may include any of features as described above for the adsorption particles.

For separation by pressure swing adsorption, any known pressure swing adsorption cycle may be used. Pressure swing adsorption steps for pressure swing adsorption cycles are described, for example, in EP2823872 and US 2015/0373713.

Examples

To quantify potential benefits offered by perforated particles, simulations for $H_2$ pressure swing adsorption (also called $H_2$ PSA) and $O_2$ pressure swing adsorption (also called $O_2$ VSA) were run for a range of perforated particles under near-retrofit conditions. Sensitivity calculations indicated that mass transfer is more important than flow resistance in $H_2$ PSA, and that flow resistance matters more than mass transfer in $O_2$ VSA. Accordingly, different types of perforated particles will be optimal for each process.

Example 1- $H_2$ PSA.

A basic $H_2$ PSA process cycle (illustrated in Table 5 of US 6,379,431) was simulated for a feed gas typical of shifted steam methane reforming off gas (shifted syngas) at 29.6 bara pressure, with disposal of waste gas at 1.5 bara (bar absolute). The adsorber vessels each contained two types of adsorbents: a layer of standard activated carbon at the feed end, and a layer of zeolite at the product end. The properties and adsorptive characteristics of the zeolite adsorbent were adjusted to represent either standard 2.0 mm diameter spherical particle or cylindrically-shaped perforated particle. The overall bed height was kept constant at 9.75 m and the relative thickness of the activated carbon layer and zeolite layer was adjusted. For both adsorbent particles considered, the simulations of the $H_2$ PSA performance were optimized to set the relative thickness of the activated carbon layer to the zeolite layer and with respect to the amount of gas transferred during the purge step. The sequence and timing of steps in both simulations remained the same. Of the cases studied, maximum productivity and recovery were achieved for a perforated particle of the following type:

particle diameter = 3.0mm;

particle height = 3.0mm;

particle void = 20%;

channel diameter = 120 □m; and

number of channels per particle = 125.

When compared to a standard 2.0 mm diameter spherical particle, the perforated particle mass transfer coefficient was 10.6 times greater and the flow resistance was equal to the resistance of the standard 2.0 mm diameter spherical particle. The amount of shifted synthesis gas processed by each adsorbent vessel over the duration of the feed step increased from 1653 to 1801 mole per $m^3$ of adsorbent in the vessel and the hydrogen recovery increased from 88.9% to 90.5%, attributable solely to the higher mass transfer of the perforated particles in the zeolite layer.

Example 2 - $H_2$ PSA with a mixed zeolite layer

In example 1, the zeolite layer for the perforated particle case consisted solely of particles having a plurality of channels (i.e. perforated particles). In this example, the zeolite layer is composed of a 50:50 split of cylindrical perforated particles in the top half of the zeolite layer and standard 2 mm spheres in the bottom half of the zeolite layer. The cylindrical perforated particles were the same as specified above in example 1.

The amount of shifted synthesis gas processed in the bed with a mixed zeolite layer over the duration of the feed step was 1836 mole per $m^3$ and the recovery was 90.8%.

The mixed zeolite layer provides improved results because at the end of the feed step, the concentration profile of the more adsorbable component has an equilibrium zone closer to the feed end of the bed and a mass transfer zone closer to the product end of the bed. The equilibrium zone may be considered to be saturated with the more adsorbable component. Because perforated particles have greater intraparticle void fraction than non-perforated particles (i.e. less solid adsorbent than the spherical particles), the spherical particles will hold a greater quantity of the more adsorbable component at equilibrium (mole/$m^3$ bed). The mixed zeolite layer takes advantage of this phenomenon. A greater adsorbent density in the equilibrium zone provides for more adsorbed impurity, thereby allowing more synthesis gas to be processed while ensuring the purity standards are maintained by the rapid mass transfer of the perforated particles near the product end of the bed. Replacing some of the perforated particles with the spherical, lower void fraction particles, also provides for increased recovery because there is a lower amount of the less adsorbable component trapped in the vessel before regeneration starts.

Example 3 - $O_2$ VSA

The sequence and timing of steps that make up the basic process cycle were not changed. Of the cases studied, lowest total cost was achieved for a perforated particle of the following type:

particle diameter = 4.0mm;

particle height = 4.0mm;

particle void = 20%;

channel diameter = 260 □m; and

number of channels per particle = 47.

When compared to a standard 1.7mm diameter spherical particle, the perforated particle mass transfer coefficient was 1.5 times greater and the flow resistance was 48% lower. Use of these perforated particles reduced total cost by 10% by a combination of higher mass transfer and lower pressure drop.

These simulations indicate significant benefits may be achieved by replacing beaded adsorbents with perforated particles, even without making substantial changes to the standard process cycles. Much greater benefits are anticipated with fresh designs.

## Claims

1. An adsorbent particle (10) comprising:

    an adsorbent material capable of preferentially adsorbing at least one more strongly adsorbable gaseous component in a mixture comprising at least two gaseous components comprising the at least one more strongly adsorbable component and at least one less strongly adsorbable component, wherein the adsorbent material is a material selected from the group consisting of activated alumina, activated carbon, zeolites, mesopore-structured materials, carbon molecular sieve, metal-organic framework materials, silica gel, and combinations thereof;
    wherein the adsorbent particle (10) defines a plurality of channels (20) numbering at least 10, preferably numbering at least 20, more preferably numbering at least 50, the plurality of channels (20) extending through the adsorbent particle (10) in a lengthwise direction from a first end (22) to a second end (24).

2. The adsorbent particle (10) of claim 1 wherein each channel of the plurality of channels (20) has an equivalent diameter, d, ranging from 0.05 mm to 1.5 mm, preferably 0.05 mm to 0.8 mm, more preferably from 0.05 to 0.5 mm, where $d = 2\sqrt{\dfrac{A}{\pi}}$, where $A$ is the cross-sectional area normal to the lengthwise direction for each respective channel.

3. The adsorbent particle (10) of claim 1 or claim 2 wherein each channel of the plurality of channels (20) has a respective distance of travel through the channel from the first end (22) to the second end (24) where the respective distance of travel is less than 150% of a respective straight-line distance from the first end (22) to the second end (24) for each channel.

4. The adsorbent particle of any one of claims 1 to 3 wherein each of the plurality of channels (20) is straight or substantially straight.

5. The adsorbent particle of any one of claims 1 to 4 wherein the channels of the plurality of channels (20) do not intersect one another.

6. The adsorbent particle (10) of any one of claims 1 to 5 wherein the adsorbent material is a material selected from the group consisting of activated carbon, 5A zeolite, CaX zeolite, 13X zeolite, NaX zeolite, CaX zeolite, LiX zeolite, carbon molecular sieve, and combinations thereof.

7. The adsorbent particle of any one of claims 1 to 6 wherein the adsorbent particle has a void fraction,

    $\dfrac{V_C}{V_T}$ , ranging from 0.05 to 0.5, where $V_C$ is the void volume in the adsorbent particle formed by a total number of channels in the adsorbent particle, and $V_T$ is the total volume of the adsorbent particle including the void volume, the adsorbent particle having no more and no less than the total number of channels.

8. An adsorption vessel (40) containing a plurality of the adsorbent particles (10) according to any one of claims 1 to 7.

9. The adsorption vessel of claim 8, having an inlet and an outlet for the mixture comprising the at least two gaseous components, the inlet and the outlet defining a principal direction of flow through the adsorption vessel (40) during an adsorption cycle feed step, wherein at least a predominant number of the channels (20) of the plurality of the the adsorbent particles (10) are aligned with the principal direction of flow through the adsorption vessel (40).

10. A process for separating a gaseous mixture (30) comprising at least two gaseous components, the process comprising:

    passing the gaseous mixture (30) to an adsorption unit (50), preferably a pressure swing adsorption unit (50), the adsorption unit (50) comprising one or more adsorption vessels (40), each of the one or more adsorption vessels (40) containing a plurality of the adsorbent particles (10), each of the plurality of adsorbent particles (10) comprising an adsorbent material capable of preferentially adsorbing an at least one more strongly adsorbable gaseous component in the gaseous mixture, wherein each of the plurality of adsorbent particles define a plurality of channels (20) numbering at least 10, the plurality of channels (20) for each adsorbent particle extending through the respective adsorbent particle in a lengthwise direction from a first end (22) to a second end (24); and
    separating the at least one more strongly adsorbable component from an at least one less strongly adsorbable component in the gaseous mixture (30) in the adsorption unit (50) to form a first product stream (60) enriched in the at least one less strongly adsorbable component and a second product stream (70) enriched in the at least one more strongly adsorbable component.

11. The process of claim 10 wherein the one or more adsorption vessels (40) are adsorption vessels according to claim 8 or claim 9.

12. A method for making a plurality of the adsorbent particles according to any one of claims 1 to 7, the method comprising:

(a) forming a composite rope comprising a precursor for forming the adsorbent material and fibers embedded in the precursor such that the fibers extend in a lengthwise direction of the composite rope, wherein the adsorbent material is a material selected from the group consisting of activated alumina, activated carbon, zeolites, mesopore-structured materials, carbon molecular sieve, metal-organic framework materials, silica gel, and combinations thereof;
(b) forming dried particle intermediates by drying and dividing the composite rope or by dividing the composite rope to form particle intermediates and drying the particle intermediates; and
(c) removing the fibers from the particle intermediates by chemically dissolving the fibers and/or firing to burn out the fibers to form the plurality of channels in each adsorbent particle.

13. The method of claim 12 wherein step (a) comprises extruding a paste comprising the fibers and the precursor through an orifice to form the composite rope.

14. The method of claim 12 wherein step (a) comprises coating the fibers with a suspension containing the precursor to form a plurality of fibrous unit cells and drawing the plurality of fibrous unit cells together to form the composite rope.

15. The method of claim 14 wherein the fibers are coated by spray-coating and/or dip-coating.

FIG. 1

FIG. 2

FIG. 3

Europäisches
Patentamt

European
Patent Office

Office européen
des brevets

# EUROPEAN SEARCH REPORT

**Application Number**

EP 15 16 3658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/000508 A1 (XUE LIXIN L [US] ET AL) 4 January 2007 (2007-01-04) * page 3; table 1 * * page 3, paragraph 37 * * page 4, left-hand column, line 13 * * page 2, paragraph 27 * | 1-7,12, 13 | INV. B01J20/28 B01J20/18 B01J20/20 B01J20/08 B01J20/10 B01J20/22 B01D53/04 |
| X | WO 95/28279 A1 (CORNING INC [US]) 26 October 1995 (1995-10-26) * figures 4-6 * * page 3, line 33 * * page 16, lines 13-20 * * page 17, lines 27-28 * | 1,3-6 | |
| X | US 2003/113538 A1 (TOM GLENN M [US] ET AL) 19 June 2003 (2003-06-19) * page 3, paragraphs 43,44, 55, 62; figure 7 * | 8 | |
| X | EP 1 080 771 A1 (BOC GROUP INC [US]) 7 March 2001 (2001-03-07) * column 3, paragraph 19 - column 4, paragraph 20 * * column 5, lines 33-34 * * column 10, lines 56-57 * * column 11, lines 7-9 * | 10,11 | **TECHNICAL FIELDS SEARCHED (IPC)** B01J B01D |
| A | DE 10 2011 050769 A1 (PRACHT SVEN [DE]) 6 December 2012 (2012-12-06) * the whole document * | 1-15 | |
| A | WO 2013/064754 A1 (PARMENTIER FRANCOIS [FR]) 10 May 2013 (2013-05-10) * the whole document * | 1-15 | |
| A | WO 2011/114017 A2 (PARMENTIER FRANCOIS [FR]) 22 September 2011 (2011-09-22) * the whole document * | 1-15 | |

The present search report has been drawn up for all claims

| Place of search | Date of completion of the search | Examiner |
|---|---|---|
| The Hague | 6 November 2015 | Hilgenga, Klaas |

EPO FORM 1503 03.82 (P04C01)

## ANNEX TO THE EUROPEAN SEARCH REPORT
## ON EUROPEAN PATENT APPLICATION NO.

EP 15 16 3658

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2015

| Patent document cited in search report | | | Publication date | Patent family member(s) | | | Publication date |
|---|---|---|---|---|---|---|---|
| US 2007000508 | A1 | | 04-01-2007 | EA | 200800166 | A1 | 28-04-2008 |
| | | | | EP | 1917210 | A2 | 07-05-2008 |
| | | | | JP | 5384107 | B2 | 08-01-2014 |
| | | | | JP | 2008544938 | A | 11-12-2008 |
| | | | | KR | 20080022177 | A | 10-03-2008 |
| | | | | UA | 94585 | C2 | 25-05-2011 |
| | | | | US | 2007000508 | A1 | 04-01-2007 |
| | | | | US | 2010163064 | A1 | 01-07-2010 |
| | | | | WO | 2007031876 | A2 | 22-03-2007 |
| WO 9528279 | A1 | | 26-10-1995 | AU | 2824895 | A | 10-11-1995 |
| | | | | BR | 9507382 | A | 23-09-1997 |
| | | | | CA | 2188222 | A1 | 18-04-1998 |
| | | | | EP | 0755328 | A1 | 29-01-1997 |
| | | | | JP | H09511982 | A | 02-12-1997 |
| | | | | WO | 9528279 | A1 | 26-10-1995 |
| US 2003113538 | A1 | | 19-06-2003 | AU | 2002352850 | A1 | 30-06-2003 |
| | | | | US | 2003113538 | A1 | 19-06-2003 |
| | | | | WO | 03051502 | A2 | 26-06-2003 |
| EP 1080771 | A1 | | 07-03-2001 | AT | 376871 | T | 15-11-2007 |
| | | | | AU | 771371 | B2 | 18-03-2004 |
| | | | | AU | 5500100 | A | 15-03-2001 |
| | | | | DE | 60036905 | T2 | 07-08-2008 |
| | | | | EP | 1080771 | A1 | 07-03-2001 |
| | | | | JP | 2001113115 | A | 24-04-2001 |
| | | | | US | 6284021 | B1 | 04-09-2001 |
| | | | | ZA | 200004516 | A | 28-02-2001 |
| DE 102011050769 | A1 | | 06-12-2012 | DE | 102011050769 | A1 | 06-12-2012 |
| | | | | WO | 2012164022 | A1 | 06-12-2012 |
| WO 2013064754 | A1 | | 10-05-2013 | EP | 2755751 | A1 | 23-07-2014 |
| | | | | US | 2014349839 | A1 | 27-11-2014 |
| | | | | WO | 2013064754 | A1 | 10-05-2013 |
| WO 2011114017 | A2 | | 22-09-2011 | CN | 102883806 | A | 16-01-2013 |
| | | | | EP | 2547440 | A2 | 23-01-2013 |
| | | | | FR | 2957276 | A1 | 16-09-2011 |
| | | | | JP | 2013522615 | A | 13-06-2013 |
| | | | | US | 2013075317 | A1 | 28-03-2013 |
| | | | | WO | 2011114017 | A2 | 22-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2823872 A
- US 20150373713 A
- US 6379431 B

### Non-patent literature cited in the description

- **VALTCHEV et al.** High energy ion-radiation-induced ordered macropores in zeolite crystals. *J. Am. Chem. Soc.,* 2001, vol. 133, 18950-18956
- **BHANDARI et al.** Hollow fiber sorbents for desulfurization of natural gas. *Ind. Eng. Chem. Res.,* 2010, vol. 49, 12038-12050